# EUROPÄISCHE PATENTANMELDUNG

(11) **EP 1 795 312 A1**
(43) Veröffentlichungstag der Anmeldung: **13.06.2007**
(21) Anmeldenummer: 05405689.0
(22) Anmeldetag: 07.12.2005
(51) Int. Cl.: B25J 9/00, B05B 13/04, B25J 9/16

(54) **Vorrichtung und Verfahren zum Bearbeiten einer gekrümmten Oberfläche eines Substrats**

(71) Anmelder: Sulzer Metco AG, 5610 Wohlen (CH)
(72) Erfinder: Dratwinski, Marian, 4332 Stein AG (CH)
(74) Vertreter: Kluthe, Stefan

(57) **Zusammenfassung**

Die Erfindung betrifft eine Vorrichtung (1) zum Bearbeiten einer gekrümmten Oberfläche (2) eines Substrats (3), umfassend eine Halterung (4) mit einem Substratträger (5), und eine Positioniereinrichtung (6), insbesondere Manipulator, zum Positionieren einer Bearbeitungseinrichtung (7) in einer Bearbeitungsposition, wobei die Halterung (4) einen beweglichen Führungsarm (8) zur Führung des Substrats (3) umfasst. Die Halterung (4) ist dabei um mindestens zwei Achsen (9, 10, 11, 12) bewegbar. Die Erfindung betrifft weiter ein Verfahren zum Beschichten eines Substrats (3) mit einer erfindungsgemässen Vorrichtung (1).

## Beschreibung

Die Erfindung betrifft eine Vorrichtung und ein Verfahren zum Bearbeiten einer gekrümmten Oberfläche eines Substrats, ein Substrat und ein Computerprogrammprodukt gemäss dem Oberbegriff des unabhängigen Anspruchs der jeweiligen Kategorie.

Die Bearbeitung von sphärischen oder sphäroidischen, von konvex oder konkav gekrümmten Oberflächen stellt seit je her eine besondere Herausforderung dar. Aufgrund der nicht planaren Geometrie treten zum Beispiel beim Beschichten durch thermisches Spitzen, beim Lackieren mit einer Spritzpistole oder auch zum Beispiel beim Sandstrahlen ganz charakteristische Probleme auf, die insbesondere die Gleichmässigkeit der Behandlung der gekrümmten Oberflächen betreffen.

Zur Verdeutlichung dieser ganz allgemeinen Problematik wird im Folgenden exemplarisch das thermische Beschichten einer Kugeloberfläche mittels einer aus dem Stand der Technik bekannten Vorrichtung betrachtet. Dabei treten im wesentlichen dieselben Probleme natürlich auch bei konkav gekrümmten Oberflächen, bei teilweise konkav und teilweise konvex geformten Oberflächen bzw. bei anderen Bearbeitungstechniken auf, wie etwa beim Lackieren einer gekrümmten Oberfläche mit einer Spritzpistole oder zum Beispiel beim Polieren einer gekrümmten Oberfläche mittels eines abrasiven Teilchenstrahls.

Eine bekannte Vorrichtung zum thermischen Beschichten umfasst einen Manipulator, der eine thermische Spritzpistole trägt, mit welchem die Spritzpistole zum Beispiel um eine vertikale Achse und um ein oder mehrere horizontale Achsen in Bezug auf ein zu beschichtendes Substrat verschwenkbar ist und einen Substrathalter, der das zu beschichtende Substrat trägt. Zum Beschichten einer kugelförmigen Oberfläche ist der Substrathalter um eine vertikale Achse rotierbar.

Die zu beschichtende Komponente, also zum Beispiel eine Kugel, wird auf dem Substrathalter montiert und in Rotation um die vertikale Achse versetzt. Die Spritzpistole wird in Betrieb genommen, so dass mit einem Spritzstrahl ein Spritzfleck mit Beschichtungsmaterial auf die Oberfläche der Kugel aufgespritzt wird. Um die gesamte Oberfläche der Kugel beschichten zu können, wird die Spritzpistole durch den Manipulator um eine horizontale Achse verschwenkt, so dass der Spritzstrahl alle Bereiche zwischen den beiden Polen, durch die die Drehachse verläuft und um die die Kugel beim Beschichten rotiert wird, erreichen kann. Da sich die Kugel beim Beschichten in Rotation befindet, beschreibt der Spritzfleck auf der Oberfläche der Kugel aufgrund der Schwenkbewegung der Spritzpistole um die horizontale Achse eine spiralförmige Bahn. D.h., der Spritzfleck bewegt sich spiralförmig auf der Oberfläche der Kugel und legt so die thermische Spritzschicht auf der Kugeloberfläche ab.

Die beste Qualität der Schicht wird dabei im Aquätorbereich der Kugel zwischen den beiden Polen erreicht, da hier der Spritzfleck im wesentlichen senkrecht auf die Oberfläche der Kugel trifft und die Rotationsgeschwindigkeit der Oberfläche am grössten ist. Je näher der Spritzfleck jedoch in Richtung einer der Pole verschwenkt wird, umso schwieriger wird es, gleichmässige Beschichtungsbedingungen einzuhalten.

Das liegt einerseits daran, dass der Rotationsradius in der Umgebung der Pole der Kugel, also in der Umgebung der Rotationsachse, immer kleiner wird und an der Rotationsachse selbst sogar zu null wird. Um eine konstante Beschichtungsgeschwindigkeit zu erreichen müsste die Kugel also immer schneller rotiert werden, je näher der Spritzfleck zu den Polen der Kugel rückt. Zur gleichmässigen Beschichtung der unmittelbaren Polumgebung müsste theoretisch die Rotationsgeschwindigkeit ins unendliche erhöht werden, weil am Pol selbst der Rotationsradius gegen null geht. Parallel dazu müsste entsprechend auch die Bewegungsgeschwindigkeit der Schwenkbewegung der Spritzpistole um die horizontale Achse auf einen beliebig hohen Wert erhöht werden, was selbstverständlich beides nicht möglich ist.

Die Folge ist, dass um die Pole herum ein beschichteter Bereich verminderter Qualität entsteht, dessen Grösse direkt proportional zum Verhältnis des Durchmessers des Spritzflecks zum Durchmesser der Kugel ist. Es hat bisher viele Ansätze gegeben diese Probleme zu vermeiden, jedoch ist bisher keine Lösung bekannt, die eine genügend gleichmässige, homogene Beschichtung über die gesamte Kugeloberfläche gestattet.

Die Aufgabe der Erfindung ist es daher, eine Vorrichtung und ein Verfahren zur Verfügung zu stellen, mit welchem eine gekrümmte Oberfläche eines Substrats in allen Bereichen der Oberfläche in höchster Gleichmässigkeit bearbeitet werden kann.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführuhgsformen der Erfindung.

Die Erfindung betrifft somit eine Vorrichtung zum Bearbeiten einer gekrümmten Oberfläche eines Substrats, umfassend eine Halterung mit einem Substratträger, und eine Positioniereinrichtung, insbesondere Manipulator, zum Positionieren einer Bearbeitungseinrichtung in einer Bearbeitungsposition, wobei die Halterung einen beweglichen Führungsarm zur Führung des Substrats umfasst. Die Halterung ist dabei um mindestens zwei Achsen bewegbar.

Wesentlich für die Erfindung ist, dass das Substrat um mehr als eine Achse bewegbar ist. So ist das Substrat nicht nur um eine Rotationsachse allein drehbar, sondern kann gleichzeitig noch um mindestens eine weitere Achse gedreht oder verschwenkt werden. Wenn zum Beispiel die Positioniereinrichtung, die die Bearbeitungseinrichtung, beispielsweise eine Einrichtung zum thermischen Spritzen trägt, dynamisch stark begrenzt ist, was häufig der Fall ist, und bei all seinen Bewegungen nur eine bestimmte Beschleunigung entwickeln kann, wird sie durch die erfindungsgemässe Vorrichtung durch eine entsprechende Bewegung des Substrats, zum Beispiel durch eine Pendelbewegung des Substrats bezüglich einer Drehachse, um die das Substart rotiert wird, unterstützt.

Bevorzugt, aber nicht notwendig, ist somit das Substrat um eine Rotationsachse drehbar und / oder der Substratträger um eine Trägerachse rotierbar. Wenn die Rotationsachse und die Trägerachse einen Winkel einschliessen, ist das Substrat um diese beiden Achsen gleichzeitig rotierbar, so dass, bei gleichzeitig geeigneter Führung der Bearbeitungseinrichtung, auch die Bereiche der Oberfläche optimal bearbeitet werden können, die in der Nähe der jeweiligen Durchstosspunkte der Rotationsachse bzw. der Trägerachse durch die zu bearbeitenden Oberfläche des Substrats liegen. Selbstverständlich ist es auch möglich, dass die Rotationsachse und die Trägerachse keinen Winkel einschliessen, also im wesentlichen identisch oder parallel sind. In einem solchen Fall ist die Halterung um mindestens eine weitere andere Achse drehbar bzw. verschwenkbar.

So kann in einem speziellen Ausführungsbeispiel die Halterung derart ausgestaltet ist sein, dass die Rotationsachse und / oder die Trägerachse in Bezug auf eine vertikale Raumrichtung, die mit der Richtung der Schwerkraft zusammenfällt, um eine erste Schwenkachse um einen vorgebbaren Winkel verschwenkbar sein. Mit dieser Ausführungsform einer erfindungsgemässen Vorrichtung sind zum Beispiel beliebig gekrümmte konvexe und / oder konkave Oberflächenbereiche eines Substrats besonders gut bearbeitbar, weil durch die Schwenkbewegung, die das Substrat ausführt, die dynamisch begrenzte Beweglichkeit der Positioniereinrichtung ausgeglichen wird, so dass zum Beispiel auch die Polbereiche einer kugelförmigen Fläche optimal bearbeitet, also zum Beispiel thermisch beschichtet, lackiert oder mit einem Strahlgut bearbeitet werden können.

Insbesondere dann, wenn sehr kompliziert geformte Oberflächenbereiche eines Substrats bearbeitet, zum Beispiel mit einer thermischen Spritzschicht belegt werden müssen, ist die Rotationsachse und / oder die Trägerachse um eine erste Raumachse rotierbar ist.

Dabei kann selbstverständlich auch die Positioniereinrichtung bzw. die Bearbeitungseinrichtung um eine Drehachse und / oder um eine Strahlachse rotierbar ausgestaltet sein und die Positioniereinrichtung kann in einem weiteren Ausführungsbeispiel gleichzeitig oder alternativ derart ausgestaltet sein, dass die Drehachse in Bezug auf die vertikale Raumrichtung um eine zweite Schwenkachse um einen vorgebbaren Winkel verschwenkbar ist.

Um die dynamische Beweglichkeit der erfindungsgemässen Vorrichtung, insbesondere der Positioniereinrichtung weiter zu verbessern, kann die Drehachse auch um eine zweite Raumachse rotierbar sein, und / oder das Substrat und / oder die Bearbeitungseinrichtung entlang einer ersten Raumrichtung und / oder entlang einer zweiten Raumrichtung und / oder entlang der dritten Raumrichtung verschiebbar sein.

Zur Ausführung der Drehbewegungen um die verschiedenen Drehachsen und / oder zur Ausführung der Schwenkbewegungen um die entsprechenden Winkel und / oder zur Ausführung der Verschiebung entlang der Raumrichtungen kann ein elektrischer und / oder ein mechanischer und / oder ein hydraulischer / und / oder ein pneumatischer und / oder ein anderer Antrieb vorgesehen ist und / oder zur Steuerung und / oder Regelung der Antriebe der Vorrichtung eine Ansteuereinrichtung, bevorzugt umfassend eine Datenverarbeitungsanlage, vorgesehen sein. Dabei ist es möglich, dass die Steuerung und / oder Regelung bzw. die Datenverarbeitungsanlage entweder nur die Bewegungen der Halterung oder nur die Bewegungen der Positioniereinrichtung oder beides gleichzeitig steuert und / oder regelt.

Die Bearbeitungseinrichtung kann dabei unter anderem eine Beschichtungseinrichtung, im besonderen eine Spritzeinrichtung, im Speziellen eine thermische Spritzeinrichtung, insbesondere eine thermische Spritzeinrichtung zum Pulver- oder Flammdrahtspritzen, zum Lichtbogenspritzen, zum HVOF Spritzen, zum Plasmaspritzen zum Cold-Spraying, zum Niederdruckbeschichten, oder eine Spritzeinrichtung zum Beschichten mit einem Fluid, insbesondere zum Beschichten oder Lackieren mit Farbe oder einem chemischen Fluid zum Schutz der Oberfläche des Substrats, insbesondere Korrosionsschutzmittel, sein.

In einem anderen Ausführungsbeispiel einer erfindungsgemässen Vorrichtung kann die Bearbeitungseinrichtung eine Einrichtung zur Behandlung der Oberfläche des Substrats, insbesondere eine Partikelstrahleinrichtung zum Bestrahlen mit geladenen oder nicht geladenen Teilchen, im Speziellen eine Strahleinrichtung zum abrasiven und / oder polierenden Strahlen der Oberfläche des Substrats mit einem abrasiven und / oder polierenden Strahlgut sein.

Desweiteren betrifft die Erfindung ein Verfahren zum Bearbeiten einer gekrümmten Oberfläche eines Substrats, wobei das Substrat zur Bearbeitung in einer Vorrichtung umfassend eine Halterung mit einem Substratträger installiert wird, und eine Positioniereinrichtung, insbesondere ein Manipulator, vorgesehen wird, mit welcher Positioniereinrichtung eine Bearbeitungseinrichtung in einer Bearbeitungsposition positioniert wird, und die Halterung einen beweglichen Führungsarm umfasst, mit welchem das Substrat in Bezug auf die Bearbeitungseinrichtung bewegt wird. Dabei wird die Halterung im Betriebszustand gleichzeitig oder nacheinander um mindestens zwei Achsen bewegt.

Dabei kann das Substrat beispielsweise um eine Rotationsachse und / oder der Substratträger um eine Trägerachse rotiert werden.

Bei einem anderen Ausführungsbeispiel eines erfindungsgemässen Verfahrens wird die Rotationsachse und / oder die Trägerachse in Bezug auf eine vertikale Raumrichtung um eine erste Schwenkachse um einen vorgegebenen Winkel verschwenkt und / oder die Rotationsachse und / oder die Trägerachse um eine erste Raumachse rotiert.

In einer anderen Ausführungsvariante kann die Bearbeitungseinrichtung um eine Drehachse und / oder um eine Strahlachse rotiert werden und / oder die Drehachse in Bezug auf die vertikale Raumrichtung um eine zweite Schwenkachse um einen vorgegebenen Winkel verschwenkt werden.

In einem weiteren Ausführungsbeispiel ist es möglich, dass gleichzeitig oder alternativ die Drehachse um eine zweite Raumachse rotiert wird, und / oder, dass das Substrat und / oder die Bearbeitungseinrichtung entlang einer ersten Raumrichtung und / oder entlang einer zweiten Raumrichtung und / oder entlang der dritten Raumrichtung verschoben wird.

Bevorzugt wird eine Ansteuereinrichtung zur Steuerung / und oder Regelung eines Antriebs der Vorrichtung vorgesehen, die z.B. mittels einer Datenverarbeitungsanlage programmgesteuert wird.

Bei einem erfindungsgemässen Verfahren ist die Bearbeitungseinrichtung eine Beschichtungseinrichtung, im Besondere eine Spritzeinrichtung, im Speziellen eine thermische Spritzeinrichtung, insbesondere eine thermische Spritzeinrichtung zum Pulver- oder Flammdrahtspritzen, zum Lichtbogenspritzen, zum HVOF Spritzen, zum Plasmaspritzen zum Cold-Spraying, zum Niederdruckbeschichten, im Speziellen LPPS, oder eine Spritzeinrichtung zum Beschichten mit einem Fluid, insbesondere zum Beschichten oder Lackieren mit Farbe oder einem Fluid zum Schutz der Oberfläche des Substrats, insbesondere Korrosionsschutzmittel, oder die Bearbeitungseinrichtung ist eine Einrichtung zur Behandlung der Oberfläche des Substrats, insbesondere eine Partikelstrahleinrichtung zum Bestrahlen mit elektrisch geladenen oder nicht geladenen Teilchen, im Speziellen eine Strahleinrichtung zum abrasiven und / oder polierenden Strahlen der Oberfläche des Substrats, und das Substrat wird mit der Bearbeitungseinrichtung gespritzt, insbesondere thermisch gespritzt und oder mit einem Fluid gespritzt, insbesondere mit Farbe lackiert und / oder mit einem Fluid, insbesondere Korrosionsschutzmittel, zum Schutz der Oberfläche des Substrats behandelt und / oder die Oberfläche des Substrats wird mit elektrisch geladenen und / oder nicht geladenen Teilchen bestrahlt, insbesondere mit abrasiven und / oder polierenden Teilchen bestrahlt.

Die Erfindung betrifft weiterhin ein Substrat, insbesondere ein Substrat mit einer konkav und / oder konvex gekrümmten Oberfläche, im Besonderen ein medizinisches Substrat, im speziellen ein künstliches Gelenk, im besonderen ein Hüftgelenk, eine Hüftgelenkkugel, eine Hüftgelenkpfanne, eine technische Komponente einer Pumpe, eines Ventils, ein Kugelkopf einer Lenkung eines Fahrzeugs, eine hydraulische Komponente oder eine andere Komponente mit einer gekrümmten Oberfläche, bearbeitet in einer erfindungsgemässen Vorrichtung wie oben beschrieben, und / oder beschichtet und / oder mit einem erfindungsgemässen Verfahren oberflächenbehandelt.

Ausserdem betrifft die Erfindung schliesslich ein Computerprogrammprodukt für eine Datenverarbeitungsanlage mit welcher eine Ansteuereinrichtung zur Steuerung / und oder Regelung einer erfindungsgemässen Vorrichtung gemäss einem erfindungsgemässen Verfahren programmgesteuert wird.

Im Folgenden wird die Erfindung an Hand der Zeichnung näher erläutert. Es zeigen in schematischer Darstellung:
- Fig. 1: eine einfache Ausführungsvariante eines erfindungsgemässen Verfahrens;
- Fig. 2: eine erfindungsgemässe Vorrichtung.

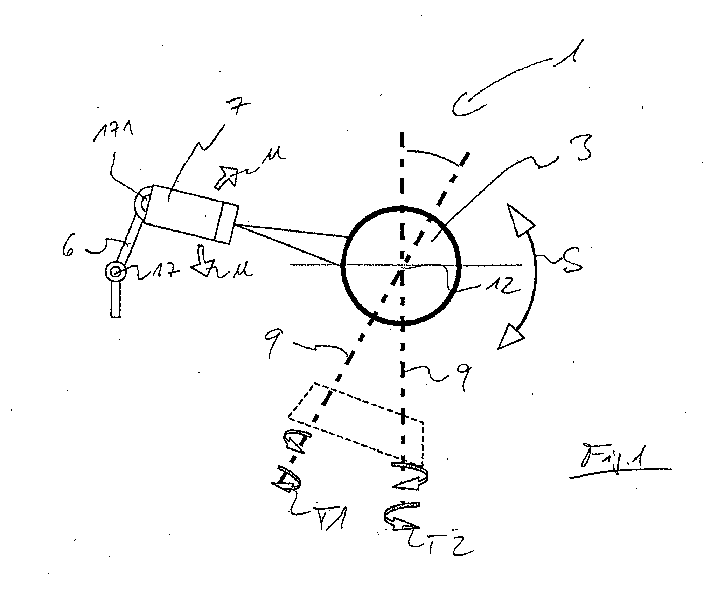

Fig. 1 zeigt in einer Darstellung eine einfache Ausführungsvariante eines erfindungsgemässen Verfahrens, an welchem die Funktionsweise einer erfindungsgemässen Vorrichtung, die im folgenden gesamthaft mit dem Bezugszeichen 1 bezeichnet ist, schematisch erläutert wird.

Die schematische Darstellung der Fig. 1 zeigt eine erfindungsgemässe Vorrichtung 1 mit einem Manipulator 6, der eine thermische Spritzpistole 7 trägt und zur Beschichtung eines kugelförmigen Substrats 3 um zwei Achsen 17, 171 verschwenkbar ist, was durch die Pfeile M symbolisiert ist. Das Substrat 3 ist auf einer aus Gründen der Übersichtlichkeit nicht dargestellten Halterung vorgesehen, die derart ausgestaltet ist, dass das Substrat 3 einerseits um die Trägerachse 9 rotierbar und gleichzeitig um die Rotationsachse 12, die im vorliegenden Beispiel senkrecht auf der Trägerachse 9 steht, drehbar angeordnet ist. Die Drehung um die Rotationsachse 12 entspricht dabei einer Schwenkbewegung senkrecht zur Rotationsachse 12, wie durch den Doppelpfeil S angedeutet ist. Im Beispiel der Fig. 1 ist es dabei so, dass die Drehrichtung des Substrats um die Trägerachse 9 zusätzlich noch, z.B. periodisch, geändert wird, so dass die Oberflächenschicht, die durch die Spritzpistole 7 auf die Oberfläche 2 des Substrats 3 aufgespritzt wird, von der Oberfläche 2 der Kugel 3 aus gesehen, abwechselnd in zwei verschiedene Richtungen gespritzt wird, so dass dadurch die Homogenität der gespritzten Schicht noch weiter verbessert wird. Diese Änderung der Rotationsrichtung um die Trägerachse 9 ist durch die beiden entgegengesetzt gerichteten Pfeile T1 und T2 symbolisiert.

Der Manipulator 6, der die Spritzpistole 7 führt, ist dynamisch stark begrenzt, sowohl was die möglichen Richtungen der Bewegung angeht, als auch die Geschwindigkeiten, mit denen die Spritzpistole 7 bewegt werden kann. Insbesondere kann der Manipulator 6 und damit die Spritzpistole 7 nur begrenzte Werte der Beschleunigung entwickeln. Um diese Nachteile zu vermeiden wird der Manipulator 6 erfindungsgemäss durch die Pendelbewegung des Substrats 3 um die Rotationsachse 12 unterstützt.

Im Beispiel der Fig. 1 schneiden sich die Trägerachse 9 und die Rotationsachse 12 im Zentrum der Kugel 3. Um bestimmte Formen zu beschichten und / oder bestimmten Eigenschaften der Schicht zu erreichen, ist es natürlich durchaus möglich den Schnittpunkt der Achsen 9, 12 ausserhalb eines Symmetriezentrums des Substrats 3 zu wählen oder deren gegenseitige Lage während eines Bearbeitungsvorgangs dynamisch zu verstellen.

Somit ist es durch den Einsatz einer erfindungsgemässen Vorrichtung 1 möglich, durch das Zusammenspiel mehrerer Bewegungen um mehrere Achsen das aus dem Stand der Technik bekannte Spiralmuster für die Bearbeitung der Oberfläche 2 zu verlassen und mit komplizierteren Mustern, zum Beispiel mit Kreis- oder Ellipsenmustern oder anderen Mustern auf der Oberfläche 2 zu arbeiten. Das Verhältnis der verschiedenen Rotationsgeschwindigkeiten und / oder die Kombination der Bewegungen bestimmen dabei die Form der auf der Oberfläche 2 gezeichneten Figuren. Die Rotationsgeschwindigkeiten um die Trägerachse 9 bestimmen die Bearbeitungsgeschwindigkeit, also z.B. die Geschwindigkeit mit der die Spritzpistole 7 die Oberfläche des Substrats 3 beschichtet.

Wegen der meistens räumlich eng begrenzten Möglichkeiten des Manipulators, zum Beispiel im Fall dass bei einem bestimmten Gasdruck und / oder unter einer Atmosphäre von besonderer chemischer Zusammensetzung und / oder in einer Atmosphäre unter bestimmten physikalischen Bedingungen, z.B. bei einer bestimmten Temperatur gearbeitet werden muss, kann in diesen Fällen die erfindungsgemässe Vorrichtung 1 und das erfindungsgemässe Verfahren besonders vorteilhaft eingesetzt werden. So kann die Erfindung zum Beispiel sehr erfolgreich beim Vakuum Plasmabeschichten eingesetzt werden.

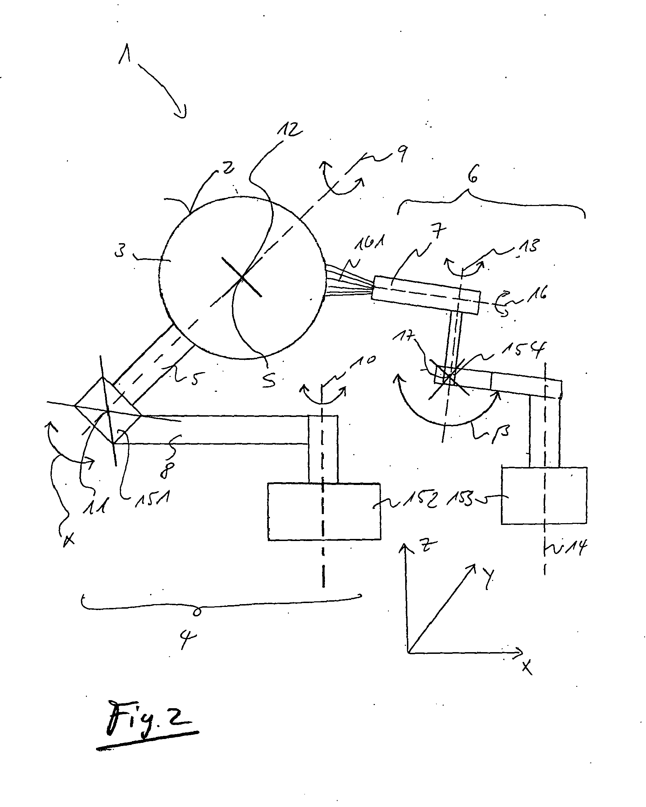

Um die enorme Flexibilität zu demonstrieren, die die vorliegende Erfindung beim Bearbeiten von Substraten 3 mit gekrümmten Oberflächen 2 bietet, ist in Fig. 2 in einer schematischen Darstellung ein etwas aufwendigeres Ausführungsbeispiel einer erfindungsgemässen Vorrichtung 1 exemplarisch dargestellt.

Das Substrat 3, dass in Fig. 2 als kugelförmiges Substrat 3 dargestellt ist, aber selbstverständlich auch ein Substrat 3 mit einer komplizierter geformten Oberfläche 2, zum Beispiel mit konkaven und / oder konvex geformten Oberflächenbereichen 2, die natürlich auch nicht, wie im Fall einer Kugel 3, überall den gleichen Krümmungsradius aufweisen müssen, ist an einer Halterung 4 auf einem Substratträger 5 montiert, welcher Substratträger 5 mit einem Führungsarm 8 beweglich verbunden ist. Der Substratträger 5 ist dabei so ausgestaltet, dass das Substrat 3 um eine Trägerachse 9 rotierbar ist, so dass das Substrat 3 von allen Seiten durch eine Bearbeitungseinrichtung 7 bearbeitet werden kann. Der Substratträger 5 umfasst weiter in Fig. 2 nicht dargestellte Mittel, so dass das Substrat 3 zusätzlich zu einer Rotation um die Trägerachse 9 noch Drehbewegungen, bevorzugt Pendelbewegungen, wie sie bereits bei Fig. 1 beschrieben und diskutiert wurden, um die Rotationsachse 12 ausführen kann. Der Substratträger 5 und der Führungsarm 8 sind dabei über ein Gelenk miteinander verbunden, so dass eine relative Position des Schwerpunkts S des Substrats 3 in Bezug auf den Führungsarm 8, durch ein Verschwenken des Substratträgers 5 um einen Winkel α um die erste Schwenkachse 11 gegen den Führungsarm 8, veränderbar bzw. einstellbar ist. Der Führungsarm 8 ist schliesslich mit einem Antrieb 151, der zum Beispiel ein elektrischer Motor, im speziellen ein Schrittmotor sein kann, verbunden, so dass die gesamte Halterung 4 mit dem Substrat 3 um eine Schwenkachse 11 in Bezug auf ein vertikale Richtung Z, die bevorzugt, aber nicht notwendig, die Richtung der Schwerkraft ist, verschwenkbar ist.

Mehr oder weniger symmetrisch dazu ist die Positioniereinrichtung 6 mit Bearbeitungseinrichtung 7, die im vorliegenden Beispiel eine thermische Spritzpistole 7 ist, aufgebaut. Die Positioniereinrichtung 6 ist derart ausgestaltet, dass die Spritzpistole 7 sowohl um eine Drehachse 13, als auch um eine Strahlachse 16, die im wesentlichen senkrecht zur Drehachse 13 und in Richtung eines Beschichtungsstrahls 161 liegt, mit dem das Substrat 3 durch die Spritzpistole 7 im Betriebszustand beschichtet wird, in Bezug auf das zu beschichtende Substrat 3 rotierbar ist. Darüber hinaus ist die Drehachse 13 in Bezug auf die vertikale Raumrichtung Z um eine zweite Schwenkachse 17 um einen vorgebbaren Winkel β verschwenkbar. Die Positioniereinrichtung 6, und somit die Drehachse 13 der Positioniereinrichtung 6 ist darüber hinaus noch um eine zweite Raumachse 14 in Bezug auf die vertikale Richtung Z, die bevorzugt, aber nicht notwendig, die Richtung der Schwerkraft ist, verschwenkbar.

Die erfindungsgemässe Vorrichtung 1 gemäss Fig. 2 bietet somit für die Bearbeitung des Substrats 3 höchste Flexibiltät und gewährleistet, dass selbst eine höchst kompliziert geformte Oberflächen 2 eines Substrats 3 völlig gleichmässig beschichtet, oder je nach verwendeter Bearbeitungseinrichtung 7, völlig gleichmässig bearbeitet werden kann.

Es versteht sich, dass die diskutierten und in den Figuren dargestellten speziellen Ausführungsbeispiele nur exemplarisch zu verstehen sind und die Erfindung selbstverständlich auch weitere, für den Fachmann nahe liegende Varianten, und insbesondere alle geeigneten Kombinationen der diskutierten Ausführungsbeispiele betrifft.

## Patentansprüche

1. Vorrichtung zum Bearbeiten einer gekrümmten Oberfläche (2) eines Substrats (3), umfassend eine Halterung (4) mit einem Substratträger (5), und eine Positioniereinrichtung (6), insbesondere Manipulator, zum Positionieren einer Bearbeitungseinrichtung (7) in einer Bearbeitungsposition, wobei die Halterung (4) einen beweglichen Führungsarm (8) zur Führung des Substrats (3) umfasst, **dadurch gekennzeichnet, dass** die Halterung (4) um mindestens zwei Achsen (9, 10, 11, 12) bewegbar ist.

2. Vorrichtung nach Anspruch 1, wobei das Substrat (3) um eine Rotationsachse (12) drehbar ist und / oder der Substratträger (5) um eine Trägerachse (9) rotierbar ist.

3. Vorrichtung nach Anspruch 1 oder 2, wobei die Halterung (4) derart ausgestaltet ist, das die Rotationsachse (12) und / oder die Trägerachse (9) in Bezug auf eine Raumrichtung (Z) um eine erste Schwenkachse (11) um einen vorgebbaren Winkel (α) verschwenkbar ist.

4. Vorrichtung nach einem der vorangehenden Ansprüche, wobei die Rotationsachse (12) und / oder die Trägerachse (9) um eine erste Raumachse (10) rotierbar ist.

5. Vorrichtung nach einem der vorangehenden Ansprüche, wobei die Bearbeitungseinrichtung (7) um eine Drehachse (13) und / oder um eine Strahlachse (16) rotierbar ist.

6. Vorrichtung nach einem der vorangehenden Ansprüche, wobei die Positioniereinrichtung (6) derart ausgestaltet ist, dass die Drehachse (13) in Bezug auf die Raumrichtung (Z) um eine zweite Schwenkachse (17) um einen vorgebbaren Winkel (β) verschwenkbar ist.

7. Vorrichtung nach einem der vorangehenden Ansprüche, wobei die Drehachse (13) um eine zweite Raumachse (14) rotierbar ist.

8. Vorrichtung nach einem der vorangehenden Ansprüche, wobei das Substrat (3) und / oder die Bearbeitungseinrichtung (7) entlang einer ersten Raumrichtung (X) und / oder entlang einer zweiten Raumrichtung (Y) und / oder entlang der dritten Raumrichtung (Z) verschiebbar ist.

9. Vorrichtung nach einem der vorangehenden Ansprüche, wobei zur Ausführung der Drehbewegungen um die Drehachsen (9, 10, 11, 12, 13, 14) und / oder zur Ausführung der Schwenkbewegungen um den Winkel (α, β) und / oder zur Ausführung der Verschiebung entlang der Raumrichtung (X, Y, Z) ein elektrischer und / oder ein mechanischer und / oder ein hydraulischer / und / oder ein pneumatischer und / oder ein anderer Antrieb (151, 152, 153, 154) vorgesehen ist und zur Steuerung / und oder Regelung der Antriebe (151, 152, 153, 154) der Vorrichtung eine Ansteuereinrichtung umfassend eine Datenverarbeitungsanlage vorgesehen ist.

10. Vorrichtung nach einem der vorangehenden Ansprüche, wobei die Bearbeitungseinrichtung (7) eine Beschichtungseinrichtung, im besonderen eine Spritzeinrichtung, im Speziellen eine thermische Spritzeinrichtung, insbesondere eine thermische Spritzeinrichtung zum Pulver- oder Flammdrahtspritzen, zum Lichtbogenspritzen, zum HVOF Spritzen, zum Plasmaspritzen zum Cold-Spraying, zum Niederdruckbeschichten, oder eine Spritzeinrichtung zum Beschichten mit einem Fluid, insbesondere zum Beschichten oder Lackieren mit Farbe oder einem chemischen Fluid zum Schutz der Oberfläche (2) des Substrats (3), insbesondere Korrosionsschutzmittel, oder wobei die Bearbeitungseinrichtung (7) eine Einrichtung zur Behandlung der Oberfläche (2) des Substrats ist (3), insbesondere Partikelstrahleinrichtung zum Bestrahlen mit geladenen oder nicht geladenen Teilchen, im Speziellen Strahleinrichtung zum abrasiven und / oder polierenden Strahlen der Oberfläche (2) des Substrats (3).

11. Verfahren zum Bearbeiten einer gekrümmten Oberfläche (2) eines Substrats (3), wobei das Substrat (3) zur Bearbeitung in einer Vorrichtung (1) umfassend eine Halterung (4) mit einem Substratträger (5) installiert wird, und eine Positioniereinrichtung (6), insbesondere Manipulator, vorgesehen wird, mit welcher Positioniereinrichtung (6) eine Bearbeitungseinrichtung (7) in einer Bearbeitungsposition positioniert wird, wobei die Halterung (4) einen beweglichen Führungsarm (8) umfasst, mit welchem das Substrat (3) in Bezug auf die Bearbeitungseinrichtung (7) bewegt wird, **dadurch gekennzeichnet, dass** die Halterung (4) im Betriebszustand gleichzeitig oder nacheinander um mindestens zwei Achsen (9, 10, 11, 12) bewegt wird.

12. Verfahren nach Anspruch 11, wobei das Substrat (3) um eine Rotationsachse (12) gedreht wird und / oder der Substratträger (5) um eine Trägerachse (9) rotiert wird.

13. Verfahren nach Anspruch 11 oder 12, wobei die Rotationsachse (12) und / oder die Trägerachse (9) in Bezug auf eine Raumrichtung (Z) um eine erste Schwenkachse (11) um einen vorgegebenen Winkel (α) verschwenkt wird.

14. Verfahren nach einem der Ansprüche 11 bis 13, wobei die Rotationsachse (12) und / oder die Trägerachse (9) um eine erste Raumachse (10) rotiert wird.

15. Verfahren nach einem der Ansprüche 11 bis 14, wobei die Bearbeitungseinrichtung (7) um eine Drehachse (13) und / oder um eine Strahlachse (16) rotiert wird.

16. Verfahren nach einem der Ansprüche 11 bis 15, wobei die Drehachse (13) in Bezug auf die Raumrichtung (Z) um eine zweite Schwenkachse (17) um einen vorgegebenen Winkel (β) verschwenkt wird.

17. Verfahren nach einem der Ansprüche 11 bis 16, wobei die Drehachse (13) um eine zweite Raumachse (14) rotiert wird.

18. Verfahren nach einem der Ansprüche 11 bis 17, wobei das Substrat (3) und / oder die Bearbeitungseinrichtung (7) entlang einer ersten Raumrichtung (X) und / oder entlang einer zweiten Raumrichtung (Y) und / oder entlang der Raumrichtung (Z) verschoben wird.

19. Verfahren nach einem der Ansprüche 11 bis 18, wobei eine Ansteuereinrichtung zur Steuerung / und oder Regelung eines Antriebs (151, 152, 153, 154) der Vorrichtung (1) vorgesehen wird, die mittels einer Datenverarbeitungsanlage programmgesteuert wird.

20. Verfahren nach einem der Ansprüche 11 bis 19, wobei die Bearbeitungseinrichtung (7) eine Beschichtungseinrichtung, im besondere eine Spritzeinrichtung, im Speziellen eine thermische Spritzeinrichtung, insbesondere eine thermische Spritzeinrichtung zum Pulver- oder Flammdrahtspritzen, zum Lichtbogenspritzen, zum HVOF Spritzen, zum Plasmaspritzen zum Cold-Spraying, zum Niederdruckbeschichten, oder eine Spritzeinrichtung zum Beschichten mit einem Fluid, insbesondere zum Beschichten oder Lackieren mit Farbe oder einem Fluid zum Schutz der Oberfläche (2) des Substrats (3), insbesondere Korrosionsschutzmittel, oder wobei die Bearbeitungseinrichtung (7) eine Einrichtung zur Behandlung der Oberfläche (2) des Substrats (3) ist, insbesondere Partikelstrahleinrichtung zum Bestrahlen mit elektrisch geladenen oder nicht geladenen Teilchen, im Speziellen Strahleinrichtung zum abrasiven und / oder polierenden Strahlen der Oberfläche (2) des Substrats (3) ist und das Substrat mit der Bearbeitungseinrichtung (7) gespritzt, insbesondere thermisch gespritzt und oder mit einem Fluid gespritzt wird, insbesondere mit Farbe lackiert wird und / oder mit einem Fluid, insbesondere Korrosionsschutzmittel, zum Schutz der Oberfläche (2) des Substrats (3) behandelt wird und / oder die Oberfläche (2) des Substrats (3) mit elektrisch geladenen und / oder nicht geladenen Teilchen bestrahlt wird, insbesondere mit abrasiven und / oder polierenden Teilchen bestrahlt wird.

21. Substrat, insbesondere Substrat mit einer konkav und / oder konvex gekrümmten Oberfläche, im Besonderen medizinisches Substrat, im Speziellen künstliches Gelenk, im Besonderen Hüftgelenk, Hüftgelenkkugel, Hüftgelenkpfanne, technische Komponente einer Pumpe, eines Ventils, Kugelkopf einer Lenkung, hydraulische Komponente oder eine andere Komponente mit einer gekrümmten Oberfläche, bearbeitet in einer Vorrichtung gemäss einem der Ansprüche 1 bis 10 und beschichtet oder oberflächenbehandelt mit einem Verfahren nach einem der Ansprüche 11 bis 20.

22. Computerprogrammprodukt für eine Datenverarbeitungsanlage mit welcher eine Ansteuereinrichtung zur Steuerung / und oder Regelung einer Vorrichtung nach einem der Ansprüche 1 bis 10 gemäss einem Verfahren nach einem der Ansprüche 11 bis 20 programmgesteuert wird.
